# EUROPEAN PATENT APPLICATION

(11) **EP 4 623 677 A1**
(43) Date of publication of application: **01.10.2025**
(21) Application number: 25163795.5
(22) Date of filing: 14.03.2025
(51) Int. Cl.: A01J 25/02, A01J 25/06, A01J 25/00, A23C 19/06, A23C 19/072, G06F 30/27, A23C 19/05, G06F 119/08, G06F 119/18

(54) **A METHOD FOR DETERMINING VALUES OF PROCESSING VARIABLES FOR A PROCESSING LINE FOR PRODUCING CHEESE**

(30) Priority: 29.03.2024 US 202418622355; 03.07.2024 EP 24186157
(71) Applicant: Tetra Laval Holdings & Finance S.A., 1009 Pully (CH)
(72) Inventor: Tran, Do, 22186 Lund (SE); Schellenberg, Noah, 22186 Lund (SE); Bradley, Herman, Denton, TX, 76207 (US); Erdenebat, Tergel, Winsted, 55395 (US); Steffens, Mark, Winsted, 55395 (US)
(74) Representative: Tetra Pak Patent Attorneys

(57) **Abstract**

A method (700) for determining values (822) of processing variables for a processing line (700) for producing cheese is disclosed. The processing variables relate to processing steps taking place in a cheese vat arrangement (800, 800a, 800b) of the processing line (700). The method comprises
obtaining (702), by a control device (808), a target moisture content value (810) of the cheese,
obtaining (704), by the control device (808), milk properties (812) of milk (M) fed into the cheese vat arrangement (800, 800a, 800b), wherein the milk properties (812) comprise pH of the milk (M), protein content of the milk (M) and fat content of the milk (M),
obtaining (706), by the control device (808), coagulant properties (814) of a coagulant fed into the cheese vat arrangement (800, 800a, 800b), wherein the coagulant properties (814) comprise type and amount of the coagulant,
obtaining (708), by the control device (808), starter properties (816) of a starter culture fed into the cheese vat arrangement, wherein the starter properties (816) comprise type and amount of the starter culture,
feeding (710) the target moisture content value (810), the milk properties (812), the coagulant properties (814) and the starter properties (816) as input features to an artificial intelligence (AI) model (818), and
in response to providing the input features to the Al model (818), obtaining (712), by the control device (808), predictions in the form of values (822) of the processing variables from the Al model (818),
wherein the processing variables comprise at least one number of cuts and/or one number of stirs performed in the cheese vat arrangement during cheese production and at least one cooking time and/or one cooking temperature used in the cheese vat arrangement during cheese production.

## Description

### Technical Field

The disclosed technology relates to cheese production. More particularly, it is related to a method for determining values of processing variables for a processing line for cheese, a method for operating such processing line, a cheese vat arrangement, and the processing line as such.

### Background Art

Over the past half-century, cheese production has undergone a profound evolution marked by technological advancements, biotechnological innovations, and a growing emphasis on sustainability.

In terms of technological advancements, automation and mechanization have revolutionized cheese production processes, enhancing efficiency and consistency. Computerized systems now monitor and control critical parameters such as temperature, pH, and moisture, ensuring precise control throughout the production process. Advanced analytical techniques have been adopted for quality control and product testing, enabling producers to detect contaminants and ensure food safety with greater accuracy.

Biotechnological innovations have also played a pivotal role in cheese production, with the introduction of genetically engineered starter cultures and enzymes. These innovations have contributed to enhancing flavor development, texture, and shelf-life of cheeses. Molecular biology techniques are today utilized for strain selection and optimization of microbial cultures used in cheese production, further improving product quality and consistency.

The cheese industry has also during the last decades increasingly embraced sustainable practices to minimize environmental impact. This includes efforts to reduce waste, improve energy efficiency, and adopt eco-friendly packaging materials. Innovative technologies for wastewater treatment and byproduct utilization have been developed, aligning with a broader commitment to environmental stewardship.

Cheese vat technology has undergone significant advancements, with the introduction of advanced vats equipped with automated stirring mechanisms, temperature control systems, and integrated sensors. These modern vats enable precise monitoring and regulation of the cheese-making process, enhancing efficiency and product consistency. Computerized control systems allow for programmable recipes, real-time data recording, and remote monitoring, further optimizing cheese production.

Advanced process optimization techniques, including mathematical modeling, simulation, and data-driven approaches, have been adopted to improve cheese-making efficiency and product quality. Technologies such as ultrasound, high-pressure processing, and membrane filtration have been integrated into cheese production processes, enhancing texture, flavor, and yield.

Even though the cheese industry has made significant progress in several areas, there are still challenges to overcome and room for improvement. One such area is production consistency. Since cheese production depends on properties of the input milk, which are varying according to season and also depend on the feed provided to the cows, the settings of equipment used in a processing line for producing the cheese are preferably continuously adjusted. By doing so, the changing properties can be compensated for and the final product, that is, the cheese, can more accurately and consistently meet set expectations. An additional challenge is that cheese production involves several steps, which more or less depend on each other. For instance, if cheddar cheese is being produced, the curd manufacture taking place in a cheese vat may have effects on the cheddaring taking place downstream the cheese vat. Still a challenge is that there is a large set-up variety among the processing lines. In other words, few processing lines are set up in the same way. This is, at least to some extent, an effect of the many steps involved in cheese production, but also in that the processing lines are modified over time. Another reason for that many processing lines for cheese are set up differently is tradition and a willingness to produce a product that stand out from competition.

Thus, even though the cheese industry has made significant progress over the last decades, the consistency of the final product, that is, i.e. the cheese, can be considered low. Indeed, the quality of the cheese produced cannot be precisely determined beforehand is that, therefore, large quantities of cheese has to be produced to be able to achieve a small amount of premium cheese. It is not uncommon to see ratios of 20:1 or more, that is, 20 kg cheese must be produced to obtain 1 kg of premium cheese. Thus, by being able to more precisely control the cheese quality indicators, such as pH value, moisture content, salt content, fat content etc, a higher yield can be achieved for cheese producers.

### Summary

It is an object of the invention to at least partly overcome one or more of the above-identified limitations of the prior art. In particular, it is an object to determine values of processing variables of cheese production lines such that the moisture content of the finished cheese can be controlled more precisely. The wording "cheese" should in this context be interpreted broadly, and this should not only cover the final cheese but also any cheese pre-cursor, such as cheese curd processed in the vat.

According to a first aspect it is provided a method for determining values of processing variables for a processing line for producing cheese , wherein the processing variables relate to processing steps taking place in a cheese vat arrangement of the processing line. The method may comprise
obtaining, by a control device, a target moisture content value of the cheese,
obtaining, by the control device, milk properties of milk fed into the cheese vat arrangement, wherein the milk properties comprise pH of the milk, protein content of the milk and fat content of the milk,
obtaining, by the control device, coagulant properties of a coagulant fed into the cheese vat arrangement, wherein the coagulant properties comprise type and amount of the coagulant,
obtaining, by the control device, starter properties of a starter culture fed into the cheese vat arrangement, wherein the starter properties comprise type and amount of the starter culture,
feeding the target moisture content value, the milk properties, the coagulant properties and the starter properties as input features to an artificial intelligence (AI) model, and
in response to providing the input features to the Al model, obtaining, by the control device, predictions in the form of values of the processing variables from the Al model,
wherein the processing variables comprise at least one number of cuts and/or one number of stirs performed in the cheese vat arrangement during cheese production and at least one cooking time and/or one cooking temperature used in the cheese vat arrangement during cheese production.

Due to the complexity of the cheese production process, it has been found that instead of having the operators to set the values of the processing variables, improved results can be achieved by having the Al model to determine these values.

The processing steps that take place in the cheese vat are relevant for the moisture content of the finished cheese. Thus, by focusing on the processing taking place in the vat arrangement, the moisture content of final products can be held more consistent. Furthermore, by determining the values of the processing variables related to the processing steps taking place in the cheese vat arrangement it is made possible to provide a precise but yet computationally efficient process for determining values relevant for keeping the moisture content of the cheese consistent over time.

The Al model may be trained for meeting the target moisture content value as well as a target standard deviation value for the moisture content value, thereby being able to produce the cheese in the production line with an improved consistency.

Being able to not only deliver cheese fulfilling a pre-set moisture content value, but also having a low variance, that is, having only minor differences in moisture content between different batches of cheese, comes with the benefit that more cost efficient cheese production can be achieved. To be able to have the cheese ageing according to plan and to develop desired texture, flavor etc, the moisture content of the cheese before the ageing process is started is one of the key factors.

The processing line may comprise a fat standardizing apparatus placed upstream the cheese vat arrangement, wherein the fat standardizing apparatus may be arranged to combine skim milk and cream to meet a pre-determined fat content of the milk, wherein the pre-determined fat content corresponds to the fat content of the milk of the milk properties obtained by the control device.

Placing the fat standardization apparatus upstream of the cheese vat arrangement allows for more precise control of the milk's fat content. This in combination with the Al model which is able to set the values of the processing variables enables the moisture content of the cheese to be controlled in a more accurate manner.

By using a vat tracing or batch approach for producing the cheese, that is, having well defined volumes of milk and, later on in the process, curd that are followed through different pieces of equipment in the processing line, dual benefits can be achieved. As explained above, information can be shared between the different pieces of equipment arranged to perform different processing steps of the processing line, and by doing so it is made possible to use this information in the Al model, thereby resulting in improved predictability of the produced cheese. In addition, by tracing the different batches, improved food safety and cost efficiency can be achieved. If one of the batches for any reason are exposed to a contamination risk, e.g. due to malfunction of the equipment, when this is identified, this one batch can be discarded. On the contrary, if not providing traceability, a larger volume of food product may have to be discarded, in turn resulting in increased waste.

The processing line may comprise a protein standardizing apparatus placed upstream the cheese vat arrangement, wherein the protein standardizing apparatus may be arranged to combine different batches or fractions of the milk to meet a pre-determined protein content, wherein the pre-determined protein content corresponds to the protein content of the milk of the milk properties obtained by the control device.

In line with the advantages described above with respect to the fat standardizing apparatus, similar advantages can be achieved by using the protein standardizing apparatus. Having both the fat standardizing apparatus and the protein content standardizing apparatus placed upstream the cheese vat arrangement enables the milk fed into the cheese vat arrangement to be controlled more precisely. As an effect, even further benefit can be made from using the Al model for determining the values of the processing variables.

The cheese vat arrangement may comprise multiple cheese vats filled and emptied in sequence.

By having multiple vats it is made possible to produce larger quantities of cheese. However, having multiple vats connected in series comes with the challenge that the process becomes more complex. Using the Al model for determining the values may therefore be even more relevant and useful if having multiple vats in a cheese production line.

As explained above, by using the vat tracing approach, i.e. tracing the different batches, it is made possible to handle multi-vat arrangements on a more detailed level compared to processing lines not having such traceability functionality.

The processing variables may comprise variables relating to two or more processing sequences performed for each batch in the cheese vat arrangement, each sequence comprising a cutting speed or stirring speed and a cooking temperature.

By having multiple sequences performed in the vat arrangement adds complexity. It has also been found that the combination of heating and cutting performed in different sequences in the cheese vat arrangement has an effect on the moisture content of the finished cheese. Thus, using the Al model may be more relevant if having multiple sequences performed in the cheese vat arrangement.

The different sequences may have different processing variables. Furthermore, an order of the different sequences may result in different properties of the finished cheese, e.g. performing a heating processing step before a cutting processing step may result in different properties of the cheese compared to performing the cutting processing step before the heating processing step.

The method may further comprise
obtaining, by the control device, a target pH value of the cheese,
wherein the target pH value is fed together with the target moisture content value, the milk properties, the coagulant properties and the starter properties as the input features to the Al model.

Combining the target cheese moisture content value with the target cheese pH value enables connections between them to be established when building the Al model, by training, which cannot be achieved when having solely the cheese moisture content value as the target value.

The method may further comprise
optimizing the predictions made by the Al model by using a metaheuristic optimization algorithm.

It has been found that once the values of the processing variables have been determined, the predictions, i.e. the values of the processing variables provided from the Al model, can be further optimized by using the metaheuristic optimization algorithm.

The metaheuristic optimization algorithm may be an evolutionary algorithm.

The evolutionary algorithm may be a differential evolution algorithm, such as Non-Dominated Sorting Differential Evolution Algorithm II (NSDE-II).

The metaheuristic optimization algorithm may be constrained by limits governing cheese production, such as allowed temperature intervals and/or cutting speeds.

By introducing the constraints a possible number of combinations of values of processing variables can be reduced, which as an effect can provide for improved efficiency from a computational power standpoint. Furthermore, by introducing the constraints it is also at an early stage possible to remove any values of the processing variables that are not respecting the feasible or legal limits. By introducing such constraints linked to legal requirements already from the start may provide for a more computationally efficient approach compared to not introducing such constraints to the algorithm and also having the options not complying with the legal requirements removed afterwards.

According to a second aspect it is provided a method for operating a processing line for producing cheese, wherein the processing line may comprise a cheese vat arrangement. The method may comprise
determining values of processing variables of the processing line according to the first aspect, and
adjusting settings of the cheese vat arrangement in accordance with the values of the processing variables.

According to a third aspect it is provided a cheese vat arrangement comprising at least one cheese vat comprising
a body for holding milk and/or curd,
a heating device arranged to heat the milk and/or curd held in the body,
a cutting device arranged to cut the curd held in the body,
a control device arranged to control operation of the heating device and the cutting device, said control device configured to
obtain a target moisture content value of cheese produced from the curd output from the cheese vat arrangement,
obtain milk properties of the milk fed into the cheese vat arrangement, wherein the milk properties comprise pH of the milk, protein content of the milk and fat content of the milk,
obtain coagulant properties of a coagulant fed into the cheese vat arrangement, wherein the coagulant properties comprise type and amount of the coagulant,
obtain starter properties of a starter culture fed into the cheese vat arrangement, wherein the starter properties comprise type and amount of the starter culture,
feed the target moisture content value, the milk properties, the coagulant properties and the starter properties as input features to an Al model,
in response to providing the input features to the Al model, obtain predictions in the form of values of the processing variables from the Al model,
wherein the processing variables comprise at least one number of cuts and/or one number of stirs performed in the cheese vat arrangement during cheese production and at least one cooking time and/or one cooking temperature used in the cheese vat arrangement during cheese production, and
adjust settings of the cheese vat arrangement in accordance with the values of the processing variables.

The same features and advantages as presented with respect to the first aspect also apply to this aspect.

The cheese vat arrangement may comprise multiple cheese vats filled and emptied in sequence.

According to a fourth aspect a processing line for producing cheese is provided. The processing line may comprise
a cheese vat arrangement according to the third aspect,
a fat standardizing apparatus placed upstream the cheese vat arrangement, wherein the fat standardizing apparatus may be arranged to combine skim milk and cream to meet a pre-determined fat content of the milk, wherein the pre-determined fat content corresponds to the fat content of the milk of the milk properties obtained by the control device, and/or
a protein standardizing apparatus placed upstream the cheese vat arrangement, wherein the protein standardizing apparatus may be arranged to combine different batches or fractions of the milk to meet a pre-determined protein content, wherein the pre-determined protein content corresponds to the protein content of the milk of the milk properties obtained by the control device.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 schematically illustrates a cheese production process.
Fig. 2 generally illustrates a cheddar cheese production process.
Fig. 3 is a diagram showing moisture content distribution for a number of batches of cheese when manually adjusting settings of a cheese vat arrangement and when using an Al model for determining values of the processing variables.
Fig. 4A and 4B illustrate an example of a user interface used for predicting the moisture content of the cheese by using the Al model.
Fig. 5A to 5D illustrate an example of the user interface used for determining the values of the processing variables based on milk properties, make details, i.e. coagulant and starter properties, a target moisture content value, and constraints applied to the prescribed processing variables.
Fig. 6 generally illustrates benefits of using the Al-enabled approach disclosed herein compared to using the current practice.
Fig. 7 is a flowchart illustrating a method for determining the values of the processing variables for a processing line.
Fig. 8 illustrates an example of the cheese vat arrangement, more particularly an example of the cheese vat arrangement comprising one cheese vat.
Fig. 9 illustrates by way of example a processing line for producing cheese.
Fig. 10 is a flowchart illustrating a method for operating the processing line.

### Detailed Description

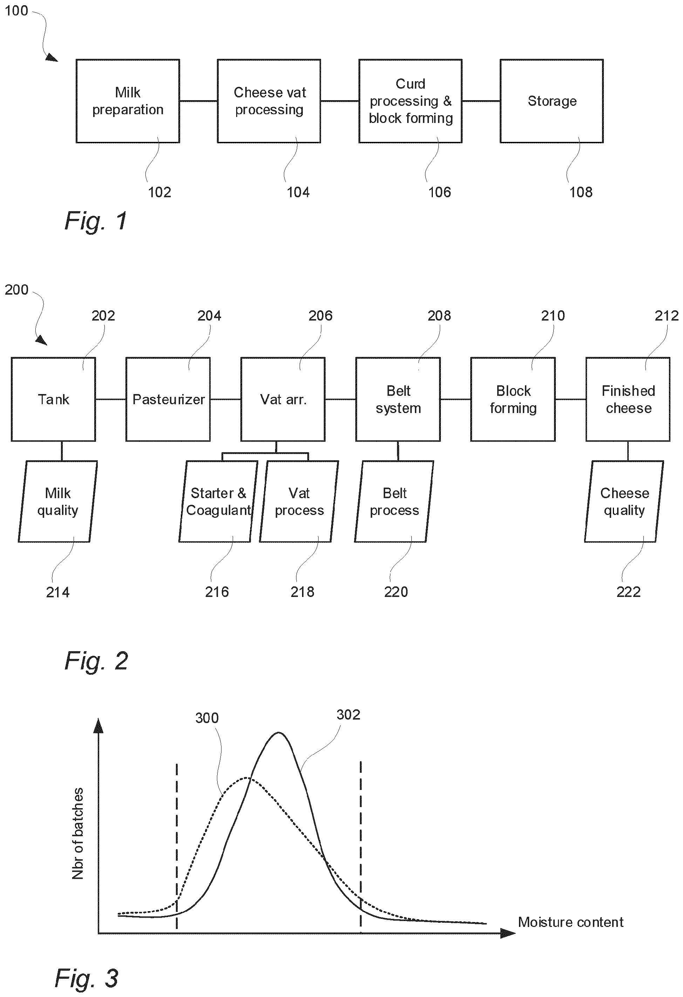

Fig. 1 is a schematic illustration of a cheese production process 100. As illustrated, in a first step 102 milk is processed, or in this context prepared for cheese production. Such preparation may include bactofugation (that is, a centrifugal process for removing spores etc. from raw milk), separation, homogenization, heat treatment, filtration, etc. Once having the milk prepared, which in this context may encompass being heat treated such that this is safe to consume and also that this fulfils pre-set requirements, such as having protein content and fat content within pre-set intervals, this is fed into a second step 104, cheese vat processing. In this step, the milk is processed in a cheese vat. Cheese vats may come in different forms and sizes. For instance, they may be open or closed vats, they may be horizontal or vertical vats, and they may be single-shafted or double-shafted. In this second step 104, a starter and a coagulant, often rennet, are added to the milk. Due to the coagulation taking place, the milk is transformed into curd. To provide for that the curd is provided with desired properties, i.e. pre-set properties, a number of sub-steps are taking place in the cheese vats. These sub-steps may include cooking, or heating, the milk one or several times at one or several temperature points, cutting the curd by using a cutting device, often a multi-blade knife arrangement, and stirring the curd. The cooking, or heating, may be achieved by having the vat arranged with a heating jacket arranged to hold hot water such that the curd can be indirectly heated via the hot water. The cutting may occur prior to the cooking, but it may also be made between different heating sequences such that a more controlled process can be achieved, which in turn provides for that properties of the curd output from the cheese vats are within a more well-defined interval. The stirring may be made by having the cutting device rotated in opposite direction such that blunt edges of the knives of the knife arrangement are pushed through the curd. Similar to the cutting, stirring may be made at several sequences during the curd making process in the vats. The heating, cutting and stirring may be taking place at the same time. By way of example, stirring may be made during heating to assure that an even heating of the different curd particles in the vat is achieved. In some cheese vats, whey is removed from the curd by using a whey strainer, i.e. a suction pipe arranged to be placed into the curd such that whey present in the curd can be removed.

The starter, or starter culture, and the coagulant can be added to the curd in the cheese vat. An advantage with this is that the starter can be added in a controlled manner, more particularly the starter can be added to the milk when this is heated to a pre-set temperature interval and/or when the coagulation process has reached a certain stage. In addition to the type and amount of starter and coagulant, when and how the starter and the coagulant are added has an effect on the final cheese.

In a third step 106, the curd is further processed and blocks are formed. In case semi-hard cheese, such as Gouda cheese, is to be produced, it is a common approach to use so-called drainage columns that remove whey from the curd and place the curd, after having the whey removed, into moulds. Once having the curd placed in the moulds, these may be fed to a pressing station in which further whey is pushed out from the curd at the same time as the curd is shaped in accordance with a shape of the mould. After being formed, the curd, now being formed as the final cheese, may be transferred to a brine bath for salting. Once being brined, the cheese may be fed into a storage in which a fourth step 108 takes place. During storing, also referred to as ageing or ripening, the starter culture added into the curd in the cheese vat is developing the texture, flavor and taste of the cheese over time, often six months or more.

In case cheddar cheese, or other closed texture type of cheese, is produced instead of Gouda cheese, as described above, the third step 106 is different. For instance, instead of using the drainage columns as explained above, a belt system arranged for removing whey, stirring, salting, forming the curd into chips, turning etc., is often used.

Fig. 2 generally illustrates a cheddar cheese production process 200. As illustrated, the milk can be provided in a tank 202, sometimes referred to as a silo. From the tank 202, the milk can be fed into a pasteurizer 204, which may be a plate heat exchanger arranged to heat treat the milk such that unwanted microorganisms are killed off. From the pasteurizer 204, the milk can be transferred into a vat arrangement 206. As described above, in the vat arrangement 206 the milk is heated, also referred to as cooked, the coagulant and the starter is added, a milk and curd mix is cut and stirred such that the milk is transformed into curd. From the vat arrangement 206, the curd can be transferred to a belt system 208 arranged for removing whey, cutting, stirring and salting so that the curd is processed in a way such that a desired flavor, texture and colour of the final cheese can be achieved. After being processed in the belt system 208, the curd can be transferred to a block former 210 where the curd can be formed. From the block former 210, a finished cheese 212, also referred herein to as final cheese, can be provided.

In this cheddar cheese production 200 illustrated by way of example, data linked to the production is used at different steps. For instance, to learn about the milk held in the tank 202, tests may be made. From these tests, information, or data, pertaining to fat content, protein content and/or pH can be obtained, herein generally referred to as milk quality data 214. This data depends on, e.g., what the cows producing the milk has been fed with, and for that reason the data may vary over time and hence may also be measured for every batch of milk received at a cheese production plant. As an alternative, the tests may be made on the farm before the milk is transported to the cheese production plant. The tests may be made manually or automatically.

Starter and coagulant data 216 may be provided to the vat arrangement 206. For instance, the starter and coagulant data 216 may pertain to a type and amount of starter, as well as a type and amount of coagulant. Unlike the milk quality data 214 which is extracted from the provided milk, the starter and coagulant 216 is, at least most often, set by an operator of the cheese production. In addition to setting the starter and the coagulant data 216, different processing variables for the vat 206 can also be set or measured. By way of example, these processing variables may comprise
- vat number, which may be relevant if the vat arrangement comprises multiple vats connected in sequence,
- filling temperature, i.e. the temperature of the milk when this is fed into the vat,
- ripening time, i.e. the elapsed time from starter culture addition to rennet addition,
- rennet addition time, i.e. when in time the rennet, or other coagulant, is to be added,
- set temperature, i.e. target temperature of the curd,
- total time in the vat arrangement,
- cutting speeds, e.g. with which speeds the cutting device is rotated at different sequences,
- cooking speeds, e.g. a heat control profile used for controlling the heating of the milk, or curd, during different sequences,
- cooking and cutting times, e.g. the durations and sequences in which cooking and cutting should be applied, and
- final stir speed, i.e. the speed of the stirring device in a final sequence before the curd is released from the vat arrangement.

The data pertaining to the values of these processing variables are herein generally referred to as vat process data 218.

As illustrated, there are also processing variables related to the belt system 208. The values of these processing variables are herein referred to as belt process data 220. This data may comprise
- transfer pH, that is, the pH value of the curd when the curd is released from the vat onto the belt,
- afterdrain pH, that is, the pH value of the curd measured right after the draining belt,
- turnover pH, that is, the pH value of the curd when this is turned by having this moved from one upper belt to a lower belt,
- mill pH, that is, the pH value of the curd when this is milled,
- salt amount, e.g. amount of salt added,
- curd temperature,
- belt speed, and
- curd depth.

As for the vat process data 218, the belt process data 220 is most often measured and adjusted by the operator according to the current practice. Even though being maintained by the operator, this does not exclude that sensors are used for keeping track of these variables and to provide for that control equipment is provided such that measured values can be assured to be in line with set values.

Tests may be made, either manually or automatically, on the finished cheese 212 for obtaining cheese quality data 222. This data may pertain to pH, fat content and moisture content in cheese.

As can be understood from the above, the cheese production processes are complex. In addition to that the milk used as raw material may vary over time, and from batch to batch, there are a plurality of processing steps that are performed for achieving the finished cheese. The complexity and difficulties linked to controlling the cheese production process comes with different effects. One such effect is that the moisture content of the finished cheese may be difficult to keep at a consistent level over several batches. As illustrated in fig. 3, when operating the cheese production process according to current practice, that is, having the operator or group of operators to set and adjust the values of the vat process data 218 and belt process data 220 manually, a moisture content distribution 300 often has a relatively large variance. This variance has a direct effect on yield. Also, since the moisture content cannot be controlled in a precise manner, only a minor part of the cheese produced can become premium cheese as an example of another downside effect.

As will be further explained below, by using an artificial intelligence (AI) model it has been found that the cheese production process can be controlled more precisely such that the moisture content distribution can be made with a relatively small variance as illustrated by an Al-improved moisture content distribution 302 in fig. 3.

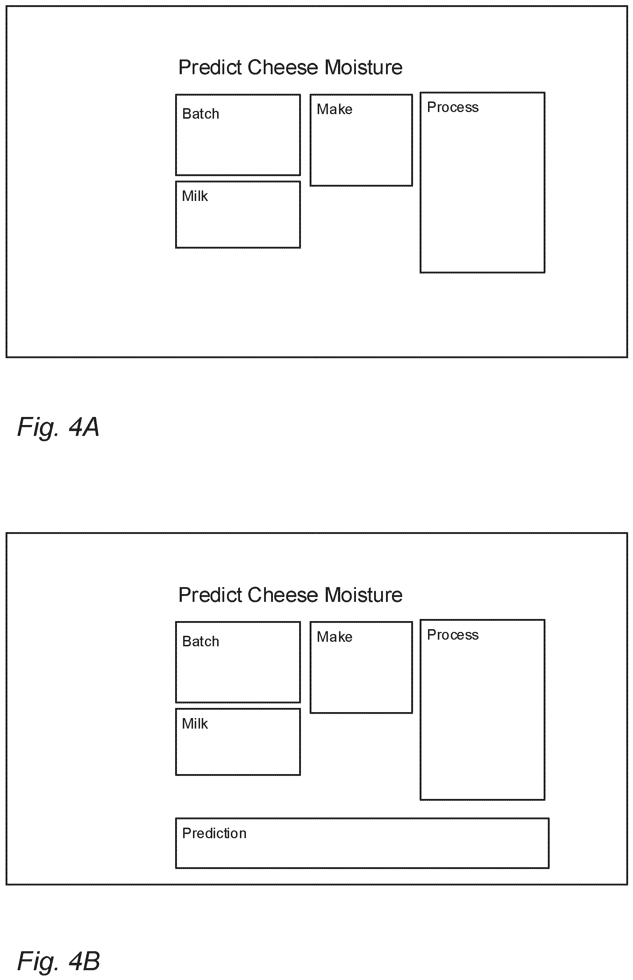

By collecting data from the cheese production process 100, in this particular example the cheddar cheese production process 200, and using this data for training the Al model, it is made possible to make better predictions regarding the moisture content of the finished cheese 212 based on the vat process data 218. By way of example, as illustrated in fig. 4A, by having information about the batch, herein grouped under the label "Batch", information about the milk, herein provided under the label "Milk", information about type and amount of starter, type and amount of rennet, and also in-process pH values at different stages, herein provided under the label "Make", and information about the values of the processing variables related to the cheese vat, that is, the vat process data 218, herein provided und the label "Process", it is possible by using the Al model to make a prediction of the moisture content of the cheese as well as a pH value of the finished cheese, as illustrated in fig. 4B.

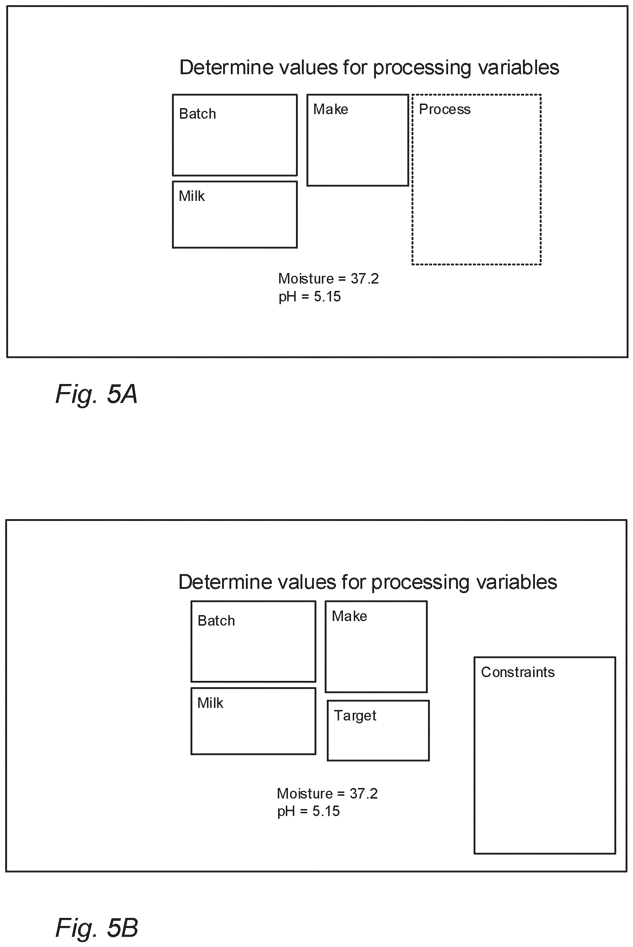

The Al model may also be used for determining the values of the processing variables of the cheese vat as illustrated in fig. 5A to 5D.

As illustrated in fig. 5A, by way of example, by having the milk quality data 214, that is, the milk protein content, the milk fat content and/or the pH value of the milk input to the cheese production process 100, more specifically the cheddar cheese production process 200, and a target moisture content value, herein 37,2%, it is made possible to determine the values of the processing variables related to the processing steps taking place in the cheese vat, or more generally cheese vat arrangement. As illustrated, to further improve accuracy of the moisture content value of the finished cheese, additional data may be used as input, such as the transfer pH, the turnover pH, the mill pH, etc.

To provide for that the values of the processing variables are kept within pre-defined intervals, constraints may be added. As illustrated in fig. 5B, such constraints may include filling temperature interval, cut speed for different sequences, cook speed for different sequences (stirring and/or cutting during cutting sequences), etc. These pre-defined intervals may be set to limit the number of combinations of options and thereby improving computational efficiency, but also for making sure that non-working combinations, known to the operators, can be excluded beforehand.

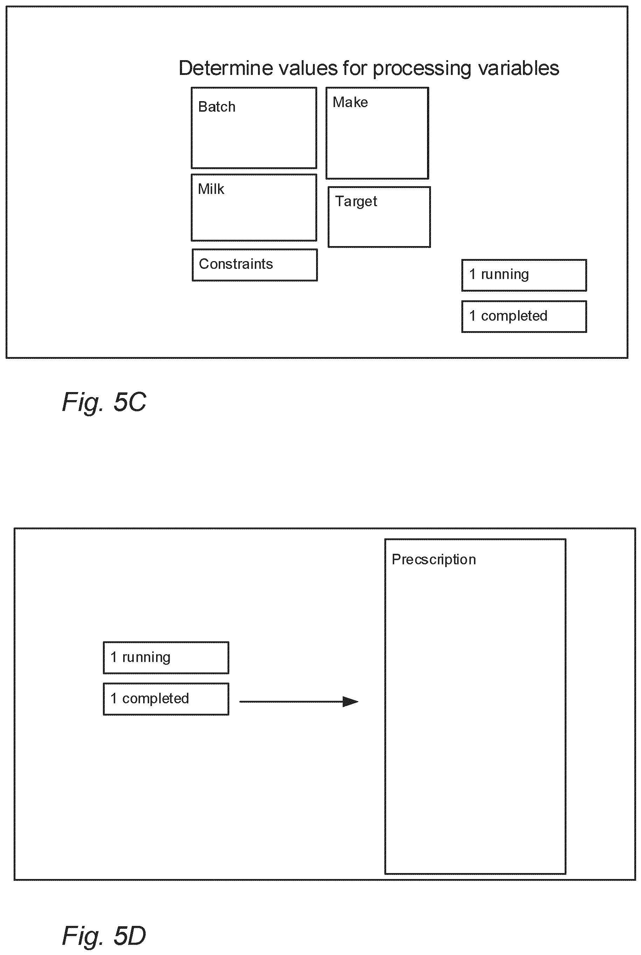

As illustrated in fig. 5C, when having set the target moisture content value and optionally the target pH value of the finished cheese, as well as milk properties, that is, pH of the milk, protein content of the milk and/or fat content of the milk, Al predictions of the processing variables can be made. In the example illustrated in fig. 5C, there is one running process and one completed process. The reason for making several predictions, simulating different scenarios, is that the operator in this way may get a better understanding on how different set ups may affect an end result.

By way of example, in fig. 5D, it is illustrated an example of how the output from the Al prediction process may be presented to the operator. As illustrated, for the competed Al prediction, the values of the processing variables are provided, i.e. prescriptions. In case the operator confirms that the cheese vat arrangement, which may comprise one or several cheese vats, is to be set in accordance with these values, the cheese vat may be set accordingly by having control data transmitted to the cheese vat arrangement. Even though illustrated in this example depicted in fig. 5A to 5D that the information is provided to the operator via a graphical user interface, other implementations may also be used. For instance, once the milk properties have been measured, these may automatically trigger a process in which the values of the processing variables of the cheese vat arrangement is determined and also that the cheese vat arrangement is set in accordance with these values.

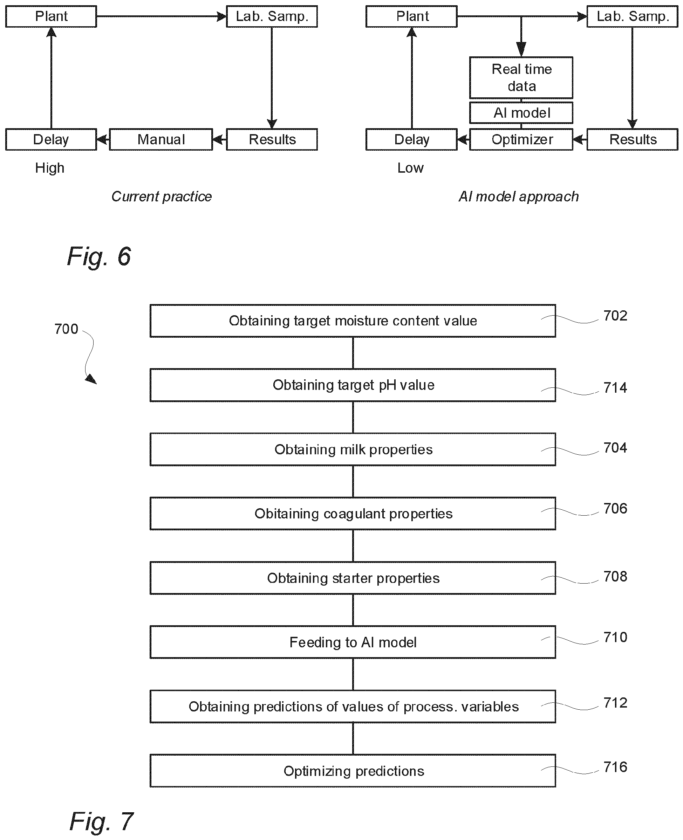

The approach described above comes with several advantages. One such advantage is that a cheese production plant, arranged to perform the cheese production process 100, may be configured to meet the target moisture content value of the finished cheese faster compared to using the current practice. As illustrated in fig. 6, the current practice, depicted to the left in the figure, consists of that laboratory samples are performed and based on the results of these, a cheese technologist or the operator provides settings of the cheese processing equipment, e.g. the values of the processing variables of the cheese vat arrangement. Due to the many variables involved in cheese making, this process often has to be repeated a number of times in order to reach the target moisture content value and the obtained moisture content may be unstable.

By using the approach suggested herein and also continuously extracting data from the plant, less time is often needed for reaching and stabilizing the target moisture content value. By using the data extracted from the plant, which may be real-time data or near real-time data, as inputs to a prediction engine, which may comprise the Al model described above, the values of the processing variables used in the cheese vat arrangement may be provided. As illustrated, these variables may in turn be fed into an optimizer, which may further improve these values such that e.g. a standard deviation of the moisture content value can be narrowed down. From the optimizer, the values may be fed into the cheese production plant such that this can be configured to produce cheese with a more stable target moisture content, thereby improving yield. An effect of making this process more time-efficient and also less labor-intensive is that this can be made at more frequent intervals, thereby making it possible to meet the variations of different milk batches more accurately.

Fig. 7 is a flowchart illustrating a method 700 for determining the values 822 of the processing variables for a processing line, e.g. the cheese production process 100 illustrated in fig. 1. The processing variables may be related to the processing steps taking place in the cheese vat arrangement. The method may comprise obtaining 702, by a control device, a target moisture content value of the cheese, obtaining 704, by the control device, milk properties of milk M fed into the cheese vat arrangement. The milk properties may comprise pH of the milk M, protein content of the milk M and fat content of the milk M. Furthermore, the method may comprise obtaining 706, by the control device, coagulant properties of a coagulant fed into the cheese vat arrangement, wherein the coagulant properties may comprise type and amount of the coagulant. In addition, the method may comprise obtaining 708, by the control device, starter properties of a starter culture fed into the cheese vat arrangement, wherein the starter properties may comprise type and amount of the starter culture. The method may further comprise feeding 710 the target moisture content value, the milk properties, the coagulant properties and the starter properties as input features to an artificial intelligence (AI) model, and in response to providing the input features to the Al model, obtaining 712, by the control device, predictions in the form of values of the processing variables from the Al model. The processing variables may comprise at least one number of cuts or one number of stirs performed in the cheese vat arrangement during cheese production and at least one cooking time or one cooking temperature used in the cheese vat arrangement during cheese production.

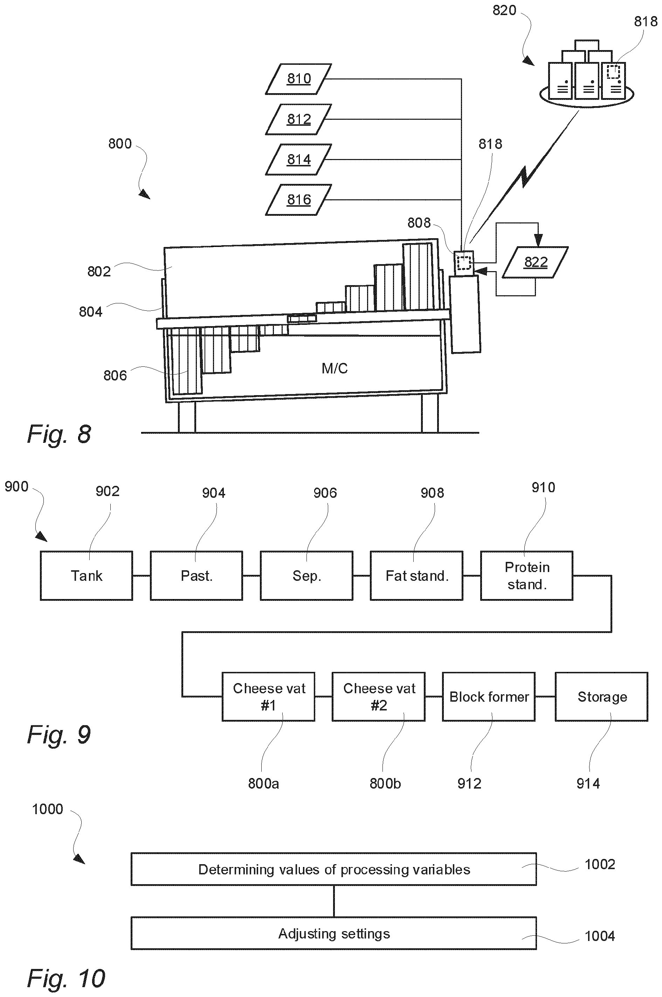

Fig. 8 illustrates an example of the cheese vat arrangement 800, more particularly an example of the cheese vat arrangement 800 comprising one cheese vat. As described above and as is described below, the cheese vat arrangement 800 may comprise one cheese vat only, which may be feasible for low volume producing cheese producing line, but it is also an option that the cheese vat arrangement 800 comprises multiple cheese vats connected in sequence and/or in parallel.

The cheese vat arrangement 800 may comprise a body 802 for holding milk M and/or curd C, a heating device 804 arranged to heat the milk M and/or curd C held in the body 802. As illustrated, the heating device 804 may be embodied as a jacket placed on the body 802. By feeding hot water into the jacket, the milk M and/or curd C held in the body 802 can be heated indirectly. In a similar manner, by feeding in cold water, the milk and curd can be cooled down indirectly. The arrangement may further comprise a cutting device 806 arranged to cut the curd C held in the body 802. As illustrated, the cutting device 806 may comprise several frames of multi-knives arrangements positioned at different rotational angles on a shaft arranged to be rotated. Furthermore, the control device 808 may be arranged to control operation of the heating device 804 and the cutting device 806. More particularly, the control device 808 may be configured to obtain a target moisture content value 810 of cheese produced from the curd C output from the cheese vat arrangement 800, obtain the milk properties 812 of the milk M fed into the cheese vat arrangement 800, wherein the milk properties 812 may comprise pH of the milk M, protein content of the milk M and/or fat content of the milk M, obtain coagulant properties 814 of a coagulant fed into the cheese vat arrangement 800, wherein the coagulant properties 814 may comprise type and amount of the coagulant, obtain starter properties 816 of the starter culture fed into the cheese vat arrangement 800, wherein the starter properties 816 may comprise type and amount of the starter culture, feed the target moisture content value 810, the milk properties 812, the coagulant properties 814 and the starter properties 816 as input features to an artificial intelligence (AI) model 818, and in response to providing the input features to the Al model 818, obtain predictions in the form of values 822 of the processing variables from the Al model 818. The processing variables may comprise at least one number of cuts or one number of stirs performed in the cheese vat arrangement during cheese production and at least one cooking time or one cooking temperature used in the cheese vat arrangement during cheese production. The method may further comprise adjusting the settings of the cheese vat arrangement 800 in accordance with the values of the processing variables.

As illustrated, the Al model 818 may be an integral part of the control device 808, that is, the Al model 818 may be stored in a memory of the control device. Another option, also illustrated, is that the Al model 818 is held on a remote server 820 communicatively connected to the control device 808. Still an option is that the Al model 818 is distributed such that part of the Al model is stored in the control device and part of the Al model on the remote server 820.

Fig. 9 illustrates by way of example a processing line 900 for producing cheese. The processing line 900 may comprise the cheese vat arrangement 800a, 800b, herein exemplified by two cheese vats in sequence. Furthermore, the line may comprise a fat standardizing apparatus 908 placed upstream the cheese vat arrangement 800a, 800b. The fat standardizing apparatus 908 may be arranged to combine skim milk and cream to meet a pre-determined fat content of the milk M, wherein the pre-determined fat content corresponds to the fat content of the milk of the milk properties 812 obtained by the control device 808. Thus, by having the fat standardizing apparatus 908 placed upstream the cheese vat arrangement 800a, 800b it is made possible to accurately set the fact content of the milk M being fed into the chees vat arrangement 800a, 800b. This in combination with having the values 822 of the processing variables determined by using the Al model as described above, it is made possible to with even further accuracy control the moisture content of the finished cheese. In addition or instead, a protein standardizing apparatus 910 placed upstream the cheese vat arrangement 800a,800b may be provided. The protein standardizing apparatus 910 may be arranged to combine different batches or fractions of the milk M to meet a pre-determined protein content. The pre-determined protein content can correspond to the protein content of the milk of the milk properties 812 obtained by the control device 808. Similar to the benefits with using the fat standardizing apparatus 908, it is advantageous to use the protein standardizing apparatus 910 in that the milk properties of the milk fed into the cheese vat can be determined with a degree of certainty. Having the protein content precisely determined in combination with using the Al model as described above provides for that precise control of the moisture content of the finished cheese can be achieved.

As described above, by sharing information between the different pieces of equipment in the processing line it is made possible to further improve the consistency of the finished cheese. Thus, using the batch approach, or vat tracing approach, in the processing line not only provides improved traceability, e.g. resulting in less waste, but also allows the different batches to be handled individually with the result that more consistent properties of the cheese can be achieved.

Fig. 10 is a flowchart illustrating a method 1000 for operating the processing line 900 for producing cheese, wherein the processing line 900 comprises the cheese vat arrangement 800, 800a, 800b. The method may comprise determining 1002 the values 822 of the processing variables of the processing line 900 according to method illustrated in fig. 7 and described above, and adjusting 1004 the settings of the cheese vat arrangement 800, 800a, 800b in accordance with the values of the processing variables. Further, the method 1000 may comprise treating the milk in the cheese vat arrangement in accordance with adjusted settings.

Referring to fig. 8, the Al model 818 can be trained during a training phase by collecting the target moisture content value 810, the milk properties 812, the coagulant properties, the starter properties 816 as well as actual moisture content values from the cheese being produced, and adjusting the Al model 818 such that differences between the target moisture content value 810 and the actual moisture content values are minimized. Further, as described above, in addition to the target moisture content value 810, the target standard deviation value of the moisture content may be included. By having both the target moisture content value as well as the target standard deviation of the moisture content being part of the training of the Al model, it is made possible to improve the consistency of the moisture content of the cheese being produced, as illustrated in fig. 3. As described above, by being able to reduce this deviation, the yield may be improved, and as an effect the product waste can be reduced. Put differently, by training the Al model, i.e. identifying links between the milk properties comprising the pH, the protein content and the fat content, which vary over time, and the processing variables comprising the number of cuts, the number of stirs performed, the cooking time and/or the cooking temperature in the cheese vat arrangement it is made possible to reduce a start-up time, i.e. less time needed for producing cheese fulfilling moisture content requirements, and reducing waste, i.e. having a system more responsive to changed properties of incoming milk provides for improved responsiveness.

From the description above follows that, although various embodiments of the invention have been described and shown, the invention is not restricted thereto, but may also be embodied in other ways within the scope of the subject-matter defined in the following claims.

## Claims

1. A method (1000) for operating a processing line (900) for producing cheese, wherein the processing line (900) comprises a cheese vat arrangement (800, 800a, 800b), said method comprising
determining (1002, 700) values (822) of processing variables of the processing line (900), and
adjusting (1004) settings of the cheese vat arrangement (800, 800a, 800b) in accordance with the values of the processing variables,
wherein the processing variables relate to processing steps taking place in a cheese vat arrangement (800, 800a, 800b) of the processing line (700), wherein the step of determining (1002, 700) the values (822) comprises
obtaining (702), by a control device (808), a target moisture content value (810) of the cheese,
obtaining (704), by the control device (808), milk properties (812) of milk (M) fed into the cheese vat arrangement (800, 800a, 800b), wherein the milk properties (812) comprise pH of the milk (M), protein content of the milk (M) and fat content of the milk (M),
obtaining (706), by the control device (808), coagulant properties (814) of a coagulant fed into the cheese vat arrangement (800, 800a, 800b), wherein the coagulant properties (814) comprise type and amount of the coagulant,
obtaining (708), by the control device (808), starter properties (816) of a starter culture fed into the cheese vat arrangement, wherein the starter properties (816) comprise type and amount of the starter culture,
feeding (710) the target moisture content value (810), the milk properties (812), the coagulant properties (814) and the starter properties (816) as input features to an artificial intelligence (AI) model (818), and
in response to providing the input features to the Al model (818), obtaining (712), by the control device (808), predictions in the form of values (822) of the processing variables from the Al model (818),
wherein the processing variables comprise at least one number of cuts and/or one number of stirs performed in the cheese vat arrangement during cheese production and at least one cooking time and/or one cooking temperature used in the cheese vat arrangement during cheese production,
thereby reducing a time needed for reaching the target moisture content value of the cheese.

2. The method according to claim 1, wherein the Al model is trained for meeting the target moisture content value (810) as well as a target standard deviation value of the moisture content, thereby being able to produce the cheese in the production line (900) with an improved consistency.

3. The method according to any one of the preceding claims, wherein the processing line (900) comprises a fat standardizing apparatus (908) placed upstream the cheese vat arrangement (800, 800a, 800b), wherein the fat standardizing apparatus (908) is arranged to combine skim milk and cream to meet a pre-determined fat content of the milk, wherein the pre-determined fat content corresponds to the fat content of the milk properties (812) obtained by the control device (808).

4. The method according to any one of the preceding claims, wherein the processing line (900) comprises a protein standardizing apparatus (910) placed upstream the cheese vat arrangement (800, 800a, 800b), wherein the protein standardizing apparatus (910) is arranged to combine different batches or fractions of the milk (M) to meet a pre-determined protein content, wherein the pre-determined protein content corresponds to the protein content of the milk properties (812) obtained by the control device (808).

5. The method according to any one of the preceding claims, wherein the cheese vat arrangement (800a, 800b) comprises multiple cheese vats (800a, 800b) filled and emptied in sequence.

6. The method according to any one of the preceding claims, wherein the processing variables comprise variables related to two or more processing sequences performed for each batch in the cheese vat arrangement (800, 800a, 800b), each sequence comprising a cutting speed or stirring speed and a cooking temperature.

7. The method according to any one of the preceding claims, said method further comprising
obtaining (714), by the control device (808), a target pH value of the cheese,
wherein the target pH value is fed together with the target moisture content value, the milk properties (812), the coagulant properties (814) and the starter properties (816) as the input features to the Al model (818).

8. The method according to any one of the preceding claims, said method further comprising
optimizing (716) the predictions made by the Al model (818) by using a metaheuristic optimization algorithm.

9. The method according to claim 8, wherein the metaheuristic optimization algorithm is an evolutionary algorithm.

10. The method according to claim 9, wherein the evolutionary algorithm is a differential evolution algorithm.

11. The method according to any one of the claims 8 to 10, wherein the metaheuristic optimization algorithm is constrained by limits governing cheese production, such as allowed temperature intervals and/or cutting speeds.

12. A cheese vat arrangement (800,800a,800b) comprising at least one cheese vat (800,800a,800b) comprising
a body (802) for holding milk (M) and/or curd (C),
a heating device (804) arranged to heat the milk (M) and/or curd (C) held in the body (802),
a cutting device (806) arranged to cut the curd (C) held in the body (802),
a control device (808) arranged to control operation of the heating device (804) and the cutting device (806), said control device (808) configured to
obtain a target moisture content value (810) of cheese produced from the curd (C) output from the cheese vat arrangement (800, 800a, 800b),
obtain milk properties (812) of the milk (M) fed into the cheese vat arrangement (800), wherein the milk properties (812) comprise pH of the milk (M), protein content of the milk (M) and fat content of the milk (M),
obtain coagulant properties (814) of a coagulant fed into the cheese vat arrangement (800), wherein the coagulant properties (814) comprise type and amount of the coagulant,
obtain starter properties (816) of a starter culture fed into the cheese vat arrangement (800), wherein the starter properties (816) comprise type and amount of the starter culture,
feed the target moisture content value (810), the milk properties (812), the coagulant properties (814) and the starter properties (816) as input features to an artificial intelligence (AI) model (818),
in response to providing the input features to the Al model (818), obtain predictions in the form of values (822) of the processing variables from the Al model (818),
wherein the processing variables comprise at least one number of cuts and/or one number of stirs performed in the cheese vat arrangement during cheese production and at least one cooking time and/or one cooking temperature used in the cheese vat arrangement during cheese production, and
adjust settings of the cheese vat arrangement (800) in accordance with the values of the processing variables,
thereby reducing a time needed for reaching the target moisture content value of the cheese.

13. The cheese vat arrangement (800a, 800b) according to claim 13, said cheese vat arrangement (800a,800b) comprising multiple cheese vats (800a, 800b) filled and emptied in sequence.

14. A processing line (900) for producing cheese, said processing line (900) comprising
a cheese vat arrangement (800, 800a, 800b) according to claim 12 or 13,
a fat standardizing apparatus (908) placed upstream the cheese vat arrangement (800a, 800b), wherein the fat standardizing apparatus (908) is arranged to combine skim milk and cream to meet a pre-determined fat content of the milk (M), wherein the pre-determined fat content corresponds to the fat content of the milk properties (812) obtained by the control device (808), and/or
a protein standardizing apparatus (910) placed upstream the cheese vat arrangement (800a,800b), wherein the protein standardizing apparatus (910) is arranged to combine different batches or fractions of the milk (M) to meet a pre-determined protein content, wherein the pre-determined protein content corresponds to the protein content of the milk properties (812) obtained by the control device (808).
